# EUROPÄISCHE PATENTANMELDUNG

(11) **EP 1 180 901 A2**
(43) Veröffentlichungstag der Anmeldung: **20.02.2002**
(21) Anmeldenummer: 01117442.2
(22) Anmeldetag: 19.07.2001
(51) Int. Cl.: H04Q 3/00

(54) **Vermittlungssteuerung in einem privaten Netz mit Telekommunikationsanlagen**

(30) Priorität: 18.08.2000 DE 10040461
(71) Anmelder: Tenovis GmbH & Co. KG, 60326 Frankfurt am Main (DE)
(72) Erfinder: Bien, Matthias, 63637 Jossgrund (DE)
(74) Vertreter: Patentanwaltskanzlei WILHELM & BECK

(57) **Zusammenfassung**

In einem privaten Netz von Telekommunikationsanlagen ist eine Steuereinheit mit einer Netzanbindung vorgesehen, um die von den Telekommunikationsanlagen über das entsprechende Gateway auf das private Netz ausgegebenen Signalisierungsinformationen zentral zu empfangen und zu interpretieren, um eine Vermittlung der Signalisierungsinformation und der zugehörigen Nutzinformation an die angesprochene Telekommunikationsanlage vornehmen zu können.

## Beschreibung

Vermittlungssteuerung in einem privaten Netz mit Telekommunikationsanlagen.

Die Erfindung betrifft eine Vermittlungssteuereinheit für ein privates Netzwerk von Telekommunikationsanlagen, die jeweils ein Gateway zur Anbindung an Kommunikationsleitungen eines privaten Netzes aufweisen, wobei eine paketorientierte, verbindungslose Datenübertragung stattfindet, ein privates Netzwerk mit einer solchen Vermittlungssteuereinheit und ein Verfahren zur paketorientierten, verbindungslosen Datenübertragung in einem solchen privaten Netze.

Telekommunikationsanlagen sind private Vermittlungssysteme, die im allgemeinen unterschiedlichste Kommunikationsdienste unterstützen. Telekommunikationsanlagen, im weiteren kurz auch TK-Anlagen genannt, eignen sich insbesondere für die Datenübertragung von Sprache, Datentexte, Graphiken und Bewegbildern. Man unterscheidet bei TK-Anlagen zwischen Eindienst- und Mehrdienstanlagen, wobei Anlagen, die nur Sprachkommunikation bieten, als Nebenstellenanlagen bezeichnet werden. Durch TK-Anlagen werden Endgeräte, z.B. analoge oder digitale Telefone, PCs, Faxgeräte, etc. über einen zentralen Knoten, der ein Koppelfeld herstellt, an ein Datenübertragungsnetz angeschlossen. Solche Datenübertragungsnetze können dabei öffentliche Netze, wie das analoge Fernsprechnetz, das ISDN oder das Internet sein, aber auch private Netze, die z.B. für die speziellen Anforderungen von Unternehmen konzipiert sind. Die privaten Netze können dabei eine eigenständige Infrastruktur, z.B. in Form eines Intranets aufweisen oder auch die öffentliche Netze in Form von Standleitungen oder Wählleitungen nutzen.

Die Datenübertragung, insbesondere der Sprachdienst zwischen TK-Anlagen erfolgt in herkömmlicher Verfahrensweise nach dem Leitungsprinzip. Dabei wird zwischen den kommunizierenden TK-Anlagen eine quasi physikalische Leitung durchgeschaltet, über die die Nutzinformation, z.B. Sprache, übertragen wird. Neben den Nutzinformationen können zwischen den TK-Anlagen zusätzlich vermittlungstechnische Informationen, sogenannte Signalisierungsinformationen, übertragen werden.

Als Standard für die logische Signalisierung zwischen TK-Anlagen hat sich dabei insbesondere das sogenannte QSIG-Protokoll durchgesetzt, das den Betreibern von privaten Netzen die Möglichkeit gibt, verschiedene TK-Anlagen zu einem heterogenen Netz zusammenzuschalten und anlagenübergreifend Leistungsmerkmale, wie z.B. die automatische Rufumleitung, zu nutzen. Das QSIG-Protokoll ist dabei im wesentlichen an die ISDN-Architektur angepasst und läuft auf einem separaten Signalisierungskanal ab, der unabhängig von den Nutzkanälen mit den Nutzinformationen, die vom QSIG-Protokoll gesteuert werden, ist.

Für die Signalisierung zwischen TK-Anlagen im privaten Netz bestehen dabei grundsätzlich zwei Möglichkeiten zur Verfügung. So können einerseits die Signalisierungsinformationen der TK-Anlagen in das vom privaten Netz verwendete Signalisierungsprotokoll umgesetzt werden, d.h. ein sogenanntes Interworking des TK-Anlagen-Vernetzungsprotokolls in das im Netz verwendete Signalisierungsprotokoll kann stattfindet. Ein solches Interworking hat den Vorteil, dass kein zusätzlicher Nutzkanal für die Signalisierungsinformation erforderlich ist. Es ist jedoch notwendig, für jede Protokollkombination, d.h. dem in der TK-Anlage verwendeten Vernetzungsprotokoll und dem auf dem Netz verwendeten Protokoll eine spezifische Interworking-Umsetzung zu implementieren. Weiterhin besteht die Gefahr, dass nicht alle Signalisierungsinformationen aus dem TK-Anlagenprotokoll in das Protokoll des privaten Netzes übertragen werden können und umgekehrt und so Informationen verloren gehen.

Die Übertragung von Signalisierungsinformationen zwischen TK-Anlagen in einem privaten Netz kann alternativ jedoch auch so durchgeführt werden, das die Signalisierungsinformationen bei der Übertragung nicht verändert werden. Bei einer solchen Signalisierung, wie sie z.B. bei einem ISDN-Netz durchgeführt wird, werden die Signalisierungsinformationen über einen eigenen Kanal, den sogenannten D-Kanal, in Paketvermiftlungstechnik übertragen werden. Diese Signalisierungstechnik eignet sich, wie bereits oben erwähnt, insbesondere zur Signalisierung zwischen TK-Anlagen nach dem QSIG-Protokoll, da hier die Signalisierungsinformationen bit-transparent zwischen den kommunizierenden TK-Anlagen vermittelt werden.

Neben den konventionellen Telekommunikationsnetzen, die im wesentlichen nach dem Leitungsvermittlungsprinzip übertragen, hat sich zunehmend die Paketdatenvermittlungstechnik durchgesetzt, bei der die übertragenen Informationen in Datenpakete umgewandelt und über ein Paketdatennetz übertragen werden. Hierbei ist vor allem die Paketdatenübertragung nach dem Internet-Protokoll in den Vordergrund gerückt, bei dem die Datenübertragung verbindungslos erfolgt. Die Datenpakete, in die die zu übertragenden Information aufgespaltet ist, werden vom Internet-Protokoll als voneinander unabhängige Datenpakete transportiert, die sich eigenständig ihren Weg durch das Netz zum Empfänger suchen. Die ursprüngliche Paketreihenfolge, die bei der verbindungslosen Übertragung nicht notwendigerweise eingehalten wird, wird auf der Empfangsseite dann wiederhergestellt.

Um eine Datenübertragung von einer TK-Anlage zu einer anderen TK-Anlage über ein privates Netz, auf dem ein Internet-Protokoll implementiert ist, vornehmen zu können, sind die TK-Anlagen mit dem Netzwerk über ein Gateway verbunden, das eine Übersetzung des Kommunikationsprotokolls der TK-Anlage auf das Internet-Protokoll vornimmt, um eine Datenübertragung zu ermöglichen. Das Gateway der TK-Anlage stellt dabei für das Internet-Protokoll einen adressierbaren Einrichtung dar, wobei das Gateway die Nutzinformationen der TK-Anlage in digitale Datenpakete kodiert und die digitalen Datenpakete beim Empfang dann wieder dekodiert.

Um die Signalisierungsinformationen von einer TK-Anlage auf die andere TK-Anlage mit Hilfe des Gateways zu übertragen, werden in herkömmlicher Verfahrensweise zwei Techniken angewandt. Die Signalisierungsinformation der TK-Anlage wird vom Gateway bittransparent über die Internet-Verbindung zum Gateway der anderen TK-Anlage übermittelt. Hierzu müssen die Gateways die Daten des TK-Anlagen-Vernetzungsprotokolls in die Datenpakete des Internet-Protokolls verpacken. Eine Analyse oder Beeinflussung der Signalisierungsinformationen durch die Gateways findet nicht statt. Zwischen den Gateways der TK-Anlagen wird dann eine Verbindung aufgebaut, über die die Datenpakete, in die Signalisierungsinformationen eingekapselt sind, übertragen werden. Eine solche Gateway-zu-Gateway-Konfiguration, bei der ein Tunneln der Signalisierungsinformationen vorgenommen wird, hat den Vorteil, dass das Gateway das Protokoll der TK-Anlage nicht verstehen muss, da durch die direkte Verbindung zwischen den Gateways keine Protokollumsetzung und keine Wegwahlentscheidung bei der Datenübertragung über das Netzwerk, d.h. kein Routing, durchgeführt wird. Nachteilig ist jedoch, dass jede TK-Anlage für jede vernetzte TK-Anlage eine eigenes Gateway zur Übertragung der Signalisierungsinformationen benötigt. Dies führt bei zunehmender Zahl von vernetzten TK-Anlagen zu einem erhöhten Hardware-Aufwand bei der Realisierung eines solchen privaten Netzes.

Alternativ zu einem eigenständigen Signalisierungskanal zur Vernetzung von verschiedenen TK-Anlagen über das Internet in einem privaten Netz werden deshalb auch intelligente Gateways eingesetzt, die das TK-Anlagen-Vernetzungsprotokoll und das Internetprotokoll vollständig verstehen und somit eine Protokollumsetzung und ein Routing ermöglichen. Dazu muss in jedem Gateway des TK-Anlagen-Netzes eine Verarbeitungsintelligenz implementiert sein, die aus den TK-Anlagen-Vernetzungsprotokoll die Information über das gewünschte Ziel der Verbindung ermittelt und in die Adresse des der Ziel-TK-Anlage zugeordneten Gateways umsetzt und zugleich ein Routing der Signalisierungsinformation über das Internet vornimmt. Ein solches intelligentes Gateway hat jedoch einen hohen Software-Aufwand zur Protokollumsetzung zwischen der TK-Anlage und dem Internet, wobei für jedes der in den verschiedenen TK-Anlagen verwendeten Protokolle ein eigenes Interworking zur Protokollumsetzung implementiert werden muss.

Aufgabe der vorliegenden Erfindung ist es, eine Vernetzung von TK-Anlagen über Internetverbindungen mit geringem Hard- und Software-Aufwand zu realisieren.

Diese Aufgabe wird von einer Steuereinheit nach Anspruch 1, einem Netzwerk nach Anspruch 14 und einem Verfahren nach Anspruch 15 gelöst. Bevorzugte Ausführungsformen sind in den abhängigen Ansprüchen angegeben.

Gemäß der Erfindung ist eine Steuereinheit mit einer Netzanbindung an die Kommunikationsleitung des privaten Netzes der TK-Anlagen versehen, um die von den TK-Anlagen über die entsprechenden Gateways auf das private Netz ausgegebenen Signalisierungsinformationen zu empfangen und zu interpretieren, um eine Vermittlung der Signalisierungsinformationen und der zugehörigen Nutzinformationen an die jeweilige Ziel-TK-Anlagen vorzunehmen.

Durch diese Auslegung des privaten Netzes mit einer zentralen Steuervermittlungseinheit ist es möglich, die Verarbeitungsintelligenz zur Umsetzung der Signalisierungsinformationen auf diese eine Steuereinheit zu konzentrieren, die die Zuordnung und Steuerung der Internet-Verbindungen und Nutzkanäle zwischen allen vernetzten TK-Anlagen vornimmt. Hierdurch wird der Hardware- und Software-Aufwand in den einzelnen Gateways der vernetzten TK-Anlage wesentlich reduziert.

Die Erfindung wird anhand der beigefügten Zeichnungen näher erläutert. Es zeigen:
- Fig. 1: eine erfindungsgemäße Vernetzung von vier TK-Anlagen über Inter-/Intranet mit einer zentralen Vermittlungssteuereinheit;
- Fig. 2: eine Signalisierungsdatenübertragung bei der in Fig. 1 gezeigten TK-Anlagen-Vernetzung;
- Fig. 3: eine erste Ausführungsform einer Nutzinformations-übertragung in der in Fig. 1 gezeigten TK-Anlagen-Vernetzung;
- Fig. 4: eine zweite Ausführungsform einer Nutzinformations-übertragung bei der in Fig. 1 gezeigten TK-Anlagen-Vernetzung; und
- Fig. 5: eine erfindungsgemäße Vernetzung von zwei TK-Anlagen mit einer Anbindung an zwei fremde Netzwerke.

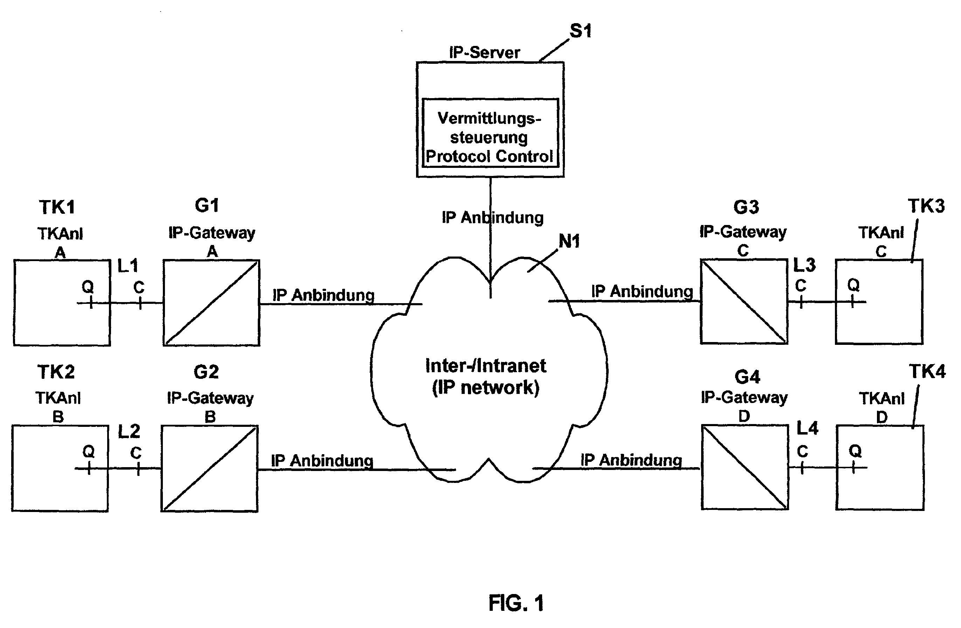

Fig. 1 zeigt ein privates Netz N1 zur Anbindung von vier Telekommunikationsanlagen TK1, TK2, TK3, TK4. Die TK-Anlagen TK1, TK2, TK3, TK4 stellen private Vermittlungssysteme dar, die unterschiedliche Kommunikationsdienste unterstützen und dabei insbesondere eine Sprachkommunikation ermöglichen. Die TK-Anlagen TK1, TK2, TK3, TK4 sind jeweils über ein eigenes Gateway G1, G2, G3, G4 an die Kommunikationsleitungen des privaten Netzes N1 angebunden. Die Datenübertragung im privaten Netz N1 erfolgt auf der Grundlage eines Internet-Protokolls, dessen Aufgabe darin besteht, die Datenpakete von einem Gateway zu einem anderen Gateway zu transportieren, wobei die Übertragung paketorientiert, verbindungslos und nicht garantiert erfolgt. Alle im Netz anfallenden Nachrichten werden durch das Internet-Protokoll in Datenpakete unterteilt, die voneinander unabhängig über die Kommunikationsleitungen des Netzes transportiert werden.

Das private Netz N1 kann auf den Kommunikationsleitungen eines öffentlichen Netzes in Form von Miet- oder Wählleitungen implementiert sein. Es besteht jedoch auch die Möglichkeit, das private Netz in Form eines Intranet mit unternehmenseigenen Kommunikationsleitungen auszubilden.

Die Gateways G1, G2, G3, G4 der einzelnen TK-Anlagen TK1, TK2, TK3, TK4 dienen dazu, die Nutzinformationen der TK-Anlagen in die Datenpakete zur Übertragung über das private Netz N1 mit dem Internet-Protokoll umzusetzen und diese beim Empfang der übertragenen Datenpakete dann wieder zurück zu konvertieren. Die Gateways G1, G2, G3, G4 sind hierzu an die Nutzkanäle der jeweiligen TK-Anlagen TK1, TK2, TK3, TK4 angebunden. Diese Kanalanbindung kann dabei über eine eigenständige Kommunikationsleitung L1, L2, L3, L4 - wie in Fig. 1 gezeigt, erfolgen. Die Gateways G1, G2, G3, G4 können jedoch auch in die TK-Anlagen TK1, TK2, TK3, TK4 integriert werden. Die Nutzkanäle der TK-Anlagen werden jeweils von einem eigenständigen Vernetzungsprotokoll der TK-Anlage gesteuert.

Die Steuerung der Übertragung der durch die Gateways G1, G2, G3, G4 umgesetzten Nutzinformation über das private Netz N1 erfolgt durch eine zentrale Vermittlungssteuereinheit S1, die ebenfalls an die Kommunikationsleitungen des privaten Netzes N1 angebunden ist. Zu dieser Vermittlungssteuereinheit S1 werden alle Signalisierungsinformationen der Vernetzungsprotokolle der TK-Anlagen TK1, TK2, TK3, TK4 übertragen. Die Signalisierungsinformationen der TK-Anlagen-Vernetzungsprotokolle enthalten die für den Austausch von Nutzinformationen zwischen den TK-Anlagen notwendigen vermittlungstechnischen Daten, also insbesondere die Adresse der TK-Anlage, der die Nutzinformation übergeben werden soll, sowie die notwendige Prozedur, die den Verbindungsaufbau und -abbau zwischen der sendenden und der empfangenden TK-Anlage steuert.

Die Signalisierungsinformationen der TK-Anlagen, die vorzugsweise nach dem QSIG-Protokoll, einem definierten Signalisierungsstandard für logische Signalisierung zwischen privaten Vermittlungsknoten, erzeugt werden, werden von den TK-Anlagen über einen separaten Signalisierungskanal an das zugehörige Gateway geliefert. Die Architektur des QSIG-Protokolls ist so ausgelegt, dass ein sogenannter Q-Referenzpunkt der logische Signalisierungspunkt für den Datenaustausch zwischen zwei TK-Anlagen ist, ein sogenannter C-Referenzpunkt bildet den Bezugspunkt für die physikalische Verbindung. Die Signalisierungsinformationen liegen vorzugsweise als digitale Informationen in Form von Datenpaketen vor.

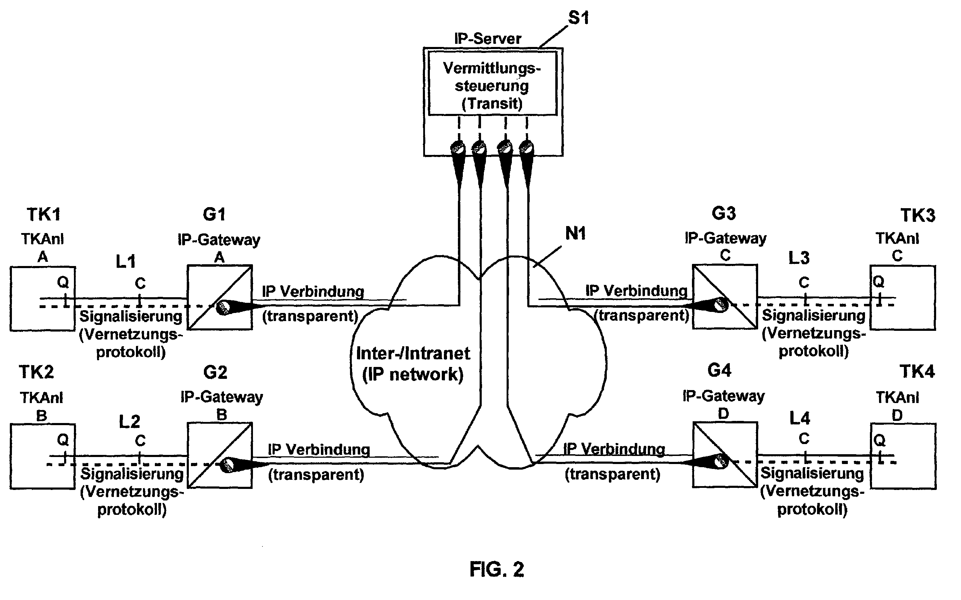

Die Signalisierungsinformationen der TK-Anlagen-Vernetzungsprotokolle werden von den Gateways der TK-Anlagen transparent über das private Netz N1 zur zentralen Vermittlungssteuereinheit S1, wie in Fig. 2 gezeigt ist, übertragen. Hierzu sind zwischen den Gateways der TK-Anlagen und der zentralen Vermittlungssteuereinheit S1 jeweils separate bit-transparente Verbindungen über das private Netz N1 geschaltet. Die Gateways G1, G2, G3, G4 der TK-Anlagen TK1, TK2, TK3, TK4 arbeiten in Bezug auf die Signalisierungsinformationen als eine Art Brücke, die für eine transparente Netzwerkankopplung sorgt, ohne dass die Signalisierungsinformationen analysiert oder bewertet werden müssen. Die Verarbeitung der Signalisierungsinformationen findet in der Vermittlungssteuereinheit S1 statt. Die Vermittlungssteuereinheit S1 versteht dabei die von den jeweiligen TK-Anlagen übermittelten Signalisierungsinformationen und nimmt eine Adressenumsetzung vor, um die Signalisierungsinformation zur jeweils angesprochenen Ziel-TK-Anlage weiterzuleiten. Die Vermittlungssteuereinheit S1 übernimmt somit die Funktion eines Routers, der die Wegwahl für den Austausch der Signalisierungsinformationen zwischen den TK-Anlagen durchführt. Im Falle, dass alle TK-Anlagen nach dem QSIG-Protokoll arbeiten, d.h. dieselbe Art von Signalisierungsinformation erzeugen, arbeitet die Vermittlungssteuereinheit S1 zusammen mit den Kommunikationsleitungen der privaten Netzes N1 und den Gateways G1, G2, G3 und G4 als QSIG-Transitknoten. Wenn die TK-Anlagen jedoch unterschiedliche Protokolle einsetzen, erfolgt in der Vermittlungssteuereinheit S1 zusätzlich eine Protokollumsetzung für die Signalisierungsinformationen.

Durch die transparente Übertragung der Signalisierungsinformationen über die jeweiligen Gateways G1, G2, G3, G4 der TK-Anlagen TK1, TK2, TK3, TK4 ist keine eigenständige Verarbeitungsintelligenz in den Gateways zur Umsetzung und zum Routing der Signalisierungsinformationen zwischen den TK-Anlagen notwendig. Die Übertragung der Signalisierungsinformationen wird ausschließlich durch die zentrale Vermittlungssteuereinheit S1 geführt.

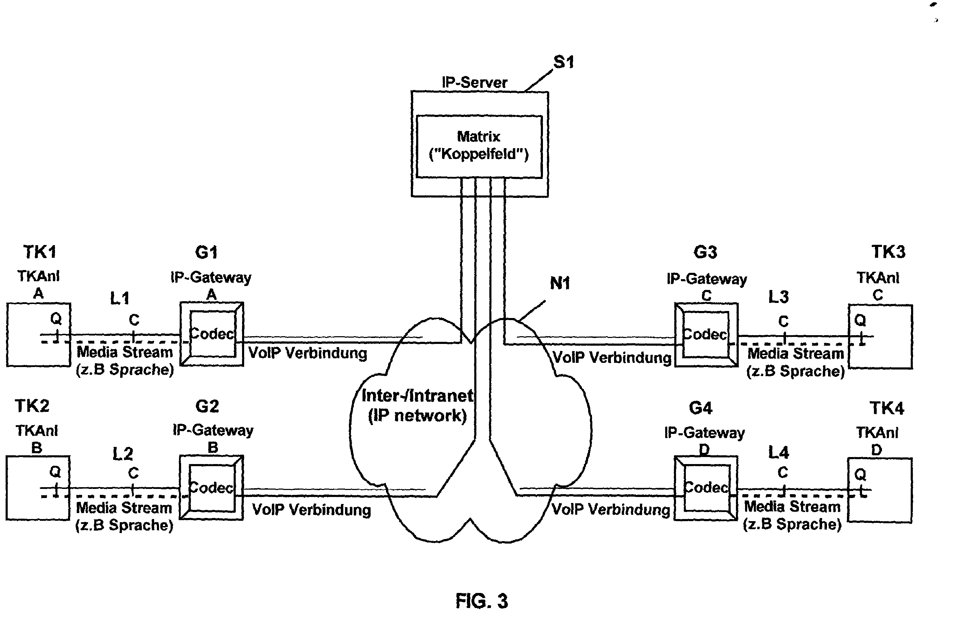

Für die Führung der Verbindungen mit den Nutzinformationen im privaten Netz nach dem Internet-Protokoll bestehen erfindungsgemäß zwei Möglichkeiten. Die Nutzinformationen, die als Datenpakete vorliegen und von den Gateways G1, G2, G3, G4 aus den Nutzinformationen auf den Nutzkanälen in den TK-Anlagen erzeugt werden, werden gemäß einer ersten Ausführungsform, wie sie in Fig. 3 gezeigt ist, ähnlich wie die Internet-Verbindungen mit den transparenten Signalisierungsinformationen des TK-Anlagen-Vernetzungsprotokolls alle zur Vermittlungssteuereinheit S1 übertragen. In der Vermittlungssteuereinheit S1 wird auf der Grundlage der zu den Nutzinformationen gehörenden Signalisierungsinformationen der jeweiligen TK-Anlage dann die Nutzinformationen an das entsprechende Gateway der Ziel-TK-Anlage weitergeleitet. Die zentrale Vermittlungssteuereinheit S1 stellt so anhand der empfangenen Signalisierungsinformation ein Koppelfeld her, das entsprechend der Signalisierungsinformation Internet-Verbindungen für die zugehörigen Nutzinformationen zwischen dem Ursprungs-Gateway und dem Ziel-Gateway aufbaut. Hierdurch kann die Verarbeitungsintelligenz der Gateways G1, G2, G3, G4 auf ein Minimum reduziert werden, da die Zuordnung und Steuerung aller Internet-Verbindungen sowohl für die Signalisierungsinformationen als auch die Nutzinformationen über die zentrale Vermittlungssteuereinheit S1 erfolgt.

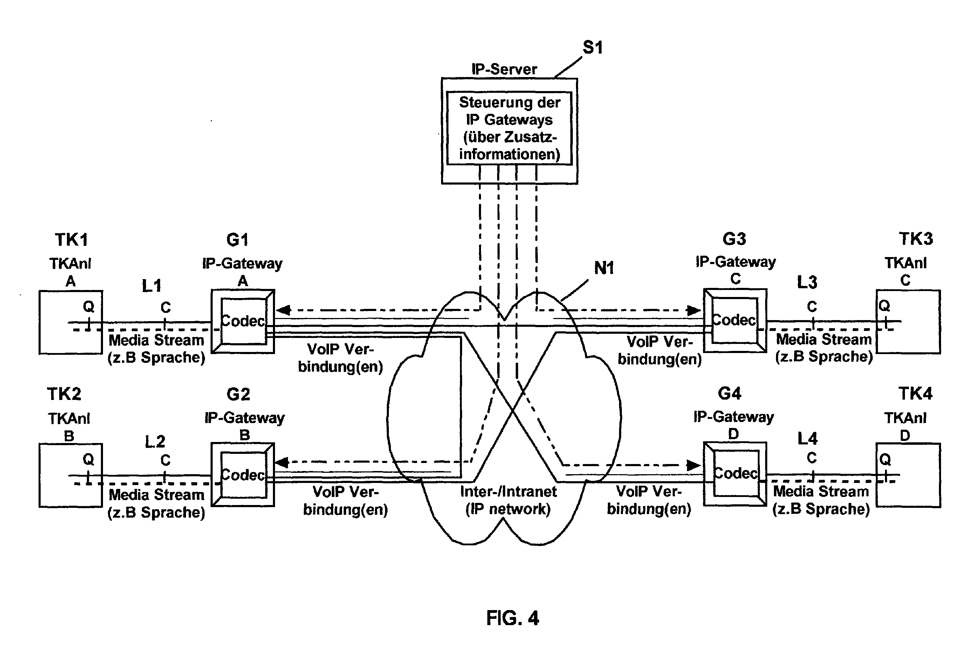

Alternativ können die Internet-Verbindungen mit den Nutzinformationen jedoch, wie in der Ausführungsform nach Fig. 4 gezeigt, auch direkt zwischen dem Ursprungs-Gateway und dem Ziel-Gateway ohne eine Zwischenschaltung der Steuervermittlungseinheit S1 aufgebaut werden. Das Routing der Nutzinformationen über das Netzwerk N1 erfolgt dabei auf der Grundlage zusätzlicher Steuerinformationen der Vermittlungssteuereinheit S1. Diese Steuerinformationen werden von der Vermittlungssteuereinheit S1 aus den Signalisierungsinformationen der TK-Anlagen generiert. Die von der Vermittlungssteuereinheit S1 erzeugten Steuerinformationen enthalten die für die Parametrisierung der Gateways zur Übertragung der Nutzinformationen wichtigen Informationen. Über die Steuerinformationen wird dem Ursprungs-Gateway von der Vermittlungssteuereinheit S1 die Daten zur Adressierung des Ziel-Gateways übermittelt. Zusätzlich enthalten die Steuerinformationen Daten für das Ursprungs-Gateway über die Zuordnung der Nutzkanäle der sendenden TK-Anlage zu den Internet-Verbindungen auf den die Netzdaten übermittelt werden sollen. In gleicher Weise wird über die Steuerinformationen dem Ziel-Gateway die Zuordnung der eingehenden Internet-Verbindungen auf die weiterführenden Nutzkanäle der empfangenen TK-Anlage mitgeteilt. Durch diese Führung der Internet-Verbindungen zur Nutzinformationsübertragung über einen zusätzlichen einfachen Informationsaustausch, der von der Vermittlungssteuereinheit S1 gesteuert wird, ist eine Adressenumsetzung in den Gateways der TK-Anlagen nicht mehr erforderlich, so dass auf die hierfür notwendige Verarbeitungsintelligenz in den Gateways verzichtet werden kann.

Neben der Führung der Internet-Verbindungen zur Nutzinformationsübertragung im privaten Netz N1 können auch der Verbindungsaufbau und der Verbindungsabbau zwischen dem sendenden Gateway der TK-Anlage und dem empfangenen Gateway der TK-Anlage durch eigenständige Aktivierungs- bzw. Deaktivierungsanreize der Vermittlungssteuereinheit S1, die auf der Grundlage der empfangenen Signalisierungsinformationen der TK-Anlagen erzeugt werden, gesteuert werden.

Weiterhin besteht auch die Möglichkeit, nur den Verbindungsaufbau durch Zusatzinformationen der Vermittlungssteuereinheit S1 für das empfangende Gateway zu steuern, den Verbindungsabbau der Gateways jedoch eigenständig von den Gateways durchführen zu lassen. Die Gateways sind hierfür so ausgelegt, dass sie mittels einer einfachen Signalerkennung, z.B. eines speziellen Ruhesignals auf den Nutzkanälen, einen nicht benutzten Nutzkanal erkennen und diesen dann abschalten.

Um verschiedene Arten von Nutzinformationen, d.h. Sprache, Texte, Graphiken und Bewegbilder etc. über die Internet-Verbindungen des privaten Netzes N1 übertragen zu können, besteht die Möglichkeit, die Internet-Verbindungen an die jeweils anspruchvollste Art der Nutzinformation anzupassen. Die Internet-Verbindungen sind dann in der Lage, alle Arten von Nutzinformationen aus den Nutzkanälen der TK-Anlagen zu übertragen. Diese Ausführung vereinfacht den Verbindungsaufbau und -abbau der Internet-Verbindungen.

Alternativ besteht jedoch auch die Möglichkeit, die Internet-Verbindungen an die jeweils zu übertragende Art der Nutzinformation anzupassen, wodurch eine optimale Nutzung der Übertragungskapazität im privaten Netz N1 gewährleistet wird. Die Kennzeichnung der Art der Nutzinformation ist dann in der Signalisierungsinformation des TK-Anlagen-Vernetzungsprotokolls enthalten, die der Vermittlungssteuereinheit S1 zugeführt wird. Die Vermittlungssteuereinheit S1 verarbeitet diese Kennzeichnung dann zu einer entsprechenden Zusatzinformation an die Gateways, die als getrennt weitere Information im privaten Netz N1 übertragen oder auch den Gateways durch eine entsprechende Erweiterung der Steuerinformation zur Führung der Nutzkanäle signalisiert werden kann. Auf der Grundlage dieser Zusatzinformation über die Art der auf der Internet-Verbindung zu übertragenden Nutzinformation wird dann die dem jeweiligen Nutzinformationstyp zugeordnete Codierungs-/ Decodierungs-Software im Gateway aktiviert, um eine optimale Umsetzung der Nutzinformation in die Internet-Datenpakete vorzunehmen.

Alle die für die Parametrisierung der Gateways G1, G2, G3, G4 der TK-Anlagen TK1, TK2, TK3, TK4 benötigten zusätzlichen Informationen könnten von der Vermittlungssteuereinheit S1 mit dem jeweils auf dem privaten Netz N1 verwendeten Internet-Protokoll zu den Gateways übertragen werden. Es besteht jedoch auch die Möglichkeit für die erweiterten Zusatzinformationen, z.B. für die Aktivierung und Deaktivierung der Internet-Verbindungen und die Kennzeichnung der Art der Nutzinformation unterschiedliche Internet-Protokolle für die Informationsübertragung zu verwenden.

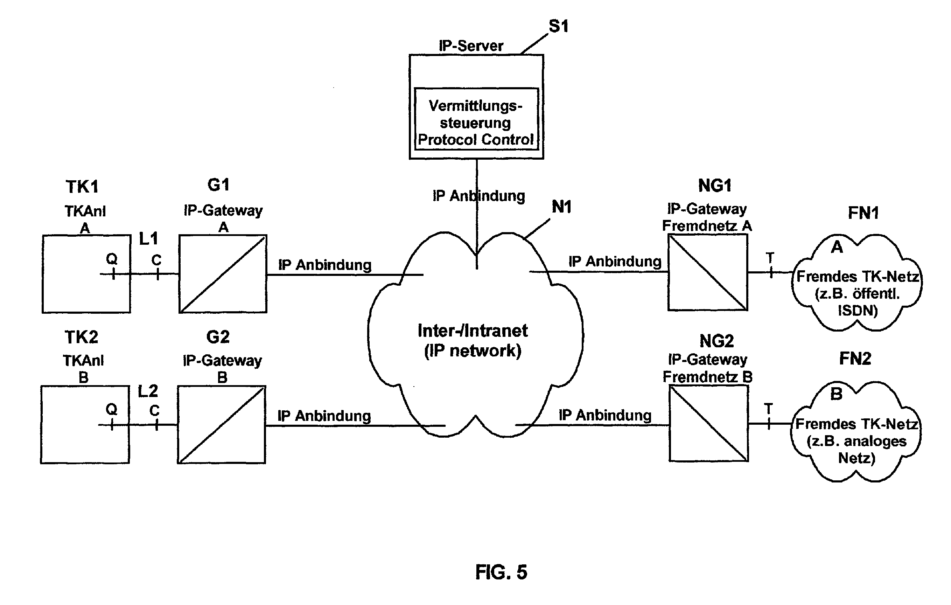

Der Einsatz einer Vermittlungssteuereinheit S1 in einem privaten Netz N1 bietet auch die Möglichkeit für eine vereinfachte Anbindung der durch ein privates Netz verbundenen TK-Anlagen an fremde Telekommunikationsnetze, z.B. öffentliche Netze wie das ISDN-Netz oder das analoge Netz mit MFV-Wahlverfahren. Eine mögliche Konfiguration zur Anbindung von zwei fremden Netzen an ein privates Netz N1 mit zwei vernetzten TK-Anlagen TK1, TK2 ist in Fig. 5 gezeigt. Die Anbindung der beiden fremden Netze FN1, FN2 erfolgt jeweils über ein separates Gateway NG1, NG2, das ähnlich wie die Gateways G1, G2 zur Vernetzung der TK-Anlagen TK1, TK2 im privaten Netz N1 keine Verarbeitungsintelligenz für die im fremden Netz verwendeten Signalisierungsprotokolle benötigt. Die Signalisierungsinformationen der fremden Netze FN1, FN2 werden über die Gateways NG1, NG2 transparent der Vermittlungssteuereinheit S1 zugeführt und von dieser bewertet. Die Zuordnung und Steuerung der Verbindungen und Nutzkanäle bei der Übertragung vom privaten Netz N1 in ein fremdes Netz erfolgt durch die Vermittlungssteuereinheit S1.

Die Umsetzung der Signalisierungsinformation des fremden Netzes in die Signalisierungsinformation der vernetzten TK-Anlagen über die Vermittlungssteuereinheit S1 kann dabei prinzipiell folgendermaßen durchgeführt werden: Wenn das anzubindende fremde TK-Netz die Nutzinformation und die Signalisierungsinformation in getrennten Kanälen führt, d.h. eine Außenband-Signalisierung, wie sie z.B. beim öffentlichen ISDN-Netz durchgeführt wird, erfolgt, werden die Signalisierungsinformationen des Signalisierungsprotokolls im fremden Netz im entsprechenden Gateway zur Anbindung dieses fremden Netzes in separate, bit-transparente Internet-Verbindungen überführt und an die Vermittlungssteuereinheit S1 übertragen. In der Vermittlungssteuereinheit S1 findet dann die Protokollumsetzung der Signalisierungsinformation des fremden Netzes in das Protokoll der vernetzten TK-Anlagen statt. Die Parametrisierung der Gateways zur Übertragung der Nutzinformationen zwischen den fremden Netzen FN1, FN2 und den TK-Anlagen TK1, TK2 des privaten Netzes N1 erfolgt dann auf der Grundlage der verarbeiteten Signalisierungsinformationen mit den in Zusammenhang mit dem privaten Netz beschriebenen Techniken.

Wenn das anzubindende fremde Netz eine Innenband-Signalisierung durchführt, d.h. das Signalisierungssignal auf dem gleichen Kanal wie die Nutzinformationen übertragen werden, wie dies z.B. beim analogen Telefonnetz mit dem MFV-Wählverfahren erfolgt, wird eine Internet-Verbindung zum Datenübertragung zwischen dem das fremde Netz anbindenden Gateway und der Vermittlungssteuereinheit S1 aufgebaut. Die Vermittlungssteuereinheit S1 extrahiert die Signalisierungsinformation aus den übertragenen Daten und setzt diese dann in das Signalisierungsprotokoll der über das private Netz verkoppelten TK-Anlagen um. Auf der Grundlage der extrahierten Signalisierungsinformationen werden dann die Nutzinformationen vom Ursprungs-Gateway, das das fremde Netz anbindet, zum Ziel-Gateway der TK-Anlage im privaten Netz geführt. Die Steuerung und Parametrisierung der Gateways kann dabei ähnlich wie vorstehend in Zusammenhang mit den Gateways der TK-Anlagen des privaten Netzes dargestellt erfolgen.

Durch die gemäß der Erfindung erfolgende Verarbeitung der Signalisierungsinformationen ausschließlich in der zentralen Vermittlungssteuereinheit S1 kann auf eine zusätzliche Verarbeitungsintelligenz in den Gateways zu Netzanbindung verzichtet werden. Die zentrale Vermittlungssteuereinheit S1 kann neben der Verarbeitung der Signalisierungsinformationen und der Steuerung der Nutzkanäle auch teilweise oder ganz die Funktion eines Gatekeepers im privaten Netz ausfüllen. Der Gatekeeper ist in einem privaten Netz das zentrale Steuerelement, das die Teilnehmer des privaten Netzes verwaltet und für die Zugangsberechtigung und Sicherheit im Netz verantwortlich ist. Diese Funktionen lassen sich als Hardware- bzw. Software-Komponenten auf die Vermittlungssteuereinheit S1 übertragen. Es besteht jedoch auch die Möglichkeit, zusätzlich zur Vermittlungssteuereinheit S1 einen getrennten Gatekeeper einzusetzen.

Die in der vorstehenden Beschreibung, den Zeichnungen und den Ansprüchen offenbarte Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Steuereinheit für ein Netzwerk von Telekommunikationsanlagen, die jeweils ein Gateway zur Anbindung an Kommunikationsleitungen eines privaten Netzes aufweisen,
wobei eine paketorientierte, verbindungslose Datenübertragung über die Kommunikationsleitungen stattfindet,
jede Telekommunikationsanlage Signalisierungsinformationen und zugehörige Nutzinformationen über das entsprechende Gateway sendet und empfängt, und
das jeweilige Gateway die Signalisierungsinformationen und die zugehörigen Nutzinformationen in Datenpakete für die Datenübertragung über die Kommunikationsleitungen umsetzt,
**dadurch gekennzeichnet, dass**
die Steuereinheit eine Anbindung an die Kommunikationsleitungen des privaten Netzes aufweist, um die von der Telekommunikationsanlage über das zugehörige Gateway auf das private Netz ausgegebene Signalisierungsinformation zu empfangen und zu interpretieren, um dann eine Vermittlung der Signalisierungsinformation und der zugehörigen Nutzinformation an die von der Telekommunikationsanlage angesprochene weitere Telekommunikationsanlage vorzunehmen.

2. Steuereinheit nach Anspruch 1, **dadurch gekennzeichnet, dass** das Gateway der sendenden Telekommunikationsanlage die Signalisierungsinformation bit-transparent zur Steuereinheit überträgt, wobei die Steuereinheit eine Adressenumsetzung auf der Grundlage der empfangenen Signalisierungsinformation vornimmt und an das Gateway der angesprochenen Telekommunikationsanlage weiterleitet.

3. Steuereinheit nach Anspruch 1 oder 2, **dadurch gekennzeichnet, dass** die Nutzinformationen von den Gateways der Telekommunikationsanlagen an die Steuereinheit übertragen werden, wobei die Steuereinheit die Nutzinformationen auf der Grundlage der zu der Nutzinformationen gehörenden Signalisierungsinformationen an die Gateways der angesprochenen Telekommunikationsanlagen weiterleitet.

4. Steuereinheit nach Anspruch 1 oder 2, **dadurch gekennzeichnet, dass** die Steuereinheit auf der Grundlage der übertragenen Signalisierungsinformation eine Steuerinformation erzeugt und an die Gateways der sendenden Telekommunikationsanlage und der angesprochenen Telekommunikationsanlage überträgt, die Informationen zur Parametrisierung der Gateways zur Übertragung der Nutzinformationen zwischen den Telekommunikationsanlagen enthält.

5. Steuereinheit nach Anspruch 4, wobei mit der Steuerinformation dem Gateway der sendenden Telekommunikationsanlage Daten zur Adressierung des Gateways der angesprochenen Telekommunikationsanlage übermittelt werden.

6. Steuereinheit nach Anspruch 4 oder 5, **dadurch gekennzeichnet, dass** die Steuereinheit die Gateways der sendenden Telekommunikationsanlage und der angesprochenen Telekommunikationsanlage mit der Steuerinformation Daten zur Zuordnung der Nutzkanäle der Telekommunikationsanlagen zu den Internet-Verbindungen, auf denen die Nutzinformationen übermittelt werden sollen, übergibt.

7. Steuereinheit nach einem der Ansprüche 1 bis 6, **dadurch gekennzeichnet, dass** die Steuereinheit auf der Grundlage der empfangenen Signalisierungsinformation durch Aktivierungs-bzw. Deaktivierungs-Signale einen Verbindungsaufbau und einen Verbindungsabbau zwischen dem Gateway der sendenden Telekommunikationsanlage und dem Gateway der angesprochenen Telekommunikationsanlage steuert.

8. Steuereinheit nach einem der Ansprüche 1 bis 6, **dadurch gekennzeichnet, dass** die Steuereinheit auf der Grundlage der empfangenen Signalisierungsinformation einen Verbindungsaufbau zwischen dem Gateway der sendenden Telekommunikationsanlage und dem Gateway der angesprochenen Telekommunikationsanlage durch ein Aktivierungssignal steuert, wobei der Verbindungsabbau zwischen den Gateways eigenständig auf der Grundlage eines Ruhesignals in den Telekommunikationsanlagen, dass nicht benutzte Nutzkanäle anzeigt, erfolgt.

9. Steuereinheit nach einem der Ansprüche 1 bis 8, **dadurch gekennzeichnet, dass** die Steuereinheit eine in der Signalisierungsinformation enthaltene Kennzeichnung der Art der Nutzinformation verarbeitet und als Zusätzinformation an den Gateways der sendenden Telekommunikationsanlage und der angesprochenen Telekommunikationsanlage übermittelt, um eine Anpassung von Nutzkanälen in der Telekommunikationsanlage an die Art der übertragenen Nutzinformation zu ermöglichen.

10. Steuereinheit nach einem der Ansprüche 1 bis 9, **dadurch gekennzeichnet, dass** die Steuereinheit zum Empfang von Signalisierungsinformation aus fremden Netzen, die über entsprechende Gateways auf das private Netz übertragen werden, geeignet ist, um die Signalisierungsinformation in die Signalisierungsinformation der angesprochenen Telekommunikationsanlage des privaten Netzes umzusetzen und die Übertragung von Information zu steuern.

11. Steuereinheit nach Anspruch 10, **dadurch gekennzeichnet, dass** das Gateway des fremden Netzes die Signalisierungsinformation bit-transparent zur Steuereinheit überträgt, wobei die Steuereinheit eine Umsetzung der Signalisierungsinformation des fremden Netzes in die Signalisierungsinformation der angesprochenen Telekommunikationsanlage vornimmt und eine Parametrisierung der Gateways zur Übertragung der Nutzinformation vom fremden Netz auf die angesprochene Telekommunikationsanlage erfolgt.

12. Steuereinheit nach Anspruch 10, **dadurch gekennzeichnet, dass** die Signalisierungsinformation zusammen mit der Nutzinformation vom Gateway des fremden Netzes zur Steuereinheit übertragen wird, wobei die Steuereinheit die Signalisierungsinformation aus den übertragenen Daten extrahiert und in die Signalisierungsinformation der angesprochenen Telekommunikationsanlage umsetzt, um eine Parametrisierung der Gateways zur Übertragung der Nutzinformationen zwischen dem fremden Netz und der angesprochenen Telekommunikationsanlage zu ermöglichen.

13. Steuereinheit nach einem der Ansprüche 1 bis 12, **dadurch gekennzeichnet, dass** die Steuereinheit die Einrichtungen des privaten Netzes verwaltet und für die Zugangsberechtigung und Sicherheit im privaten Netz verantwortlich ist.

14. Netzwerk für Telekommunikationsanlagen, die jeweils ein Gateway zur Anbindung an Kommunikationsleitungen eines privaten Netzes aufweisen, wobei
eine paketorientierte, verbindungslose Datenübertragung über die Kommunikationsleitungen stattfindet,
jede Telekommunikationsanlage Signalisierungsinformationen und zugehörige Nutzinformationen über das entsprechenden Gateway sendet und empfängt, und
das jeweilige Gateway die Signalisierungsinformation und die zugehörige Nutzinformation in Datenpaketen für die Datenübertragung über die Kommunikationsleitungen umsetzt,
**dadurch gekennzeichnet, dass**
eine Steuereinheit vorgesehen ist, die eine Anbindung an die Kommunikationsleitungen des privaten Netzes aufweist, um die von der Telekommunikationsanlage über das entsprechende Gateway auf das private Netz ausgegebene Signalisierungsinformation zu empfangen und zu interpretieren, um eine Vermittlung der Signalisierungsinformation und der zugehörigen Nutzinformation an die angesprochene Telekommunikationsanlage vorzunehmen.

15. Verfahren zur paketorientierten verbindungslosen Datenübertragung in einem Netzwerk von Telekommunikationsanlagen, die jeweils ein Gateway zur Anbindung an die Kommunikationsleitungen eines privaten Netzes aufweisen, wobei jede Telekommunikationsanlage Signalisierungsinformationen und zugehörige Nutzinformationen über das entsprechende Gateway sendet und empfängt, und
das jeweilige Gateway die Signalisierungsinformation und die zugehörige Nutzinformation in Datenpakete für eine Datenübertragung über das private Netz umsetzt,
**dadurch gekennzeichnet, dass**
eine an die Kommunikationsleitungen des privaten Netzes angebundene Steuereinheit die von den Telekommunikationsanlage über das jeweilige Gateway ausgegebene Signalisierungsinformation zentral empfängt und interpretiert, um eine Vermittlung der Signalisierungsinformationen und der zugehörigen Nutzinformation an die jeweilige angesprochene Telekommunikationsanlage vorzunehmen.
